# EUROPEAN PATENT SPECIFICATION

(11) **EP 4 454 735 B1**
(45) Date of publication and mention of the grant of the patent: **26.11.2025**
(21) Application number: 23200742.7
(22) Date of filing: 29.09.2023
(51) Int. Cl.: B01D 53/00, B01D 53/04, B01D 53/14, B01D 53/26, F23J 15/02

(54) **HIGH-HYDROGEN FUEL FLUE GAS TREATMENT SYSTEM AND METHOD**
RAUCHGASBEHANDLUNGSSYSTEM UND -VERFAHREN FÜR BRENNSTOFF MIT HOHEM WASSERSTOFFGEHALT
SYSTÈME ET PROCÉDÉ DE TRAITEMENT DE GAZ DE COMBUSTION DE COMBUSTIBLE À HAUTE TENEUR EN HYDROGÈNE

(30) Priority: 28.04.2023 CN 202310484447
(43) Date of publication of application: 30.10.2024
(73) Proprietor: Qinhuangdao Glass Industry Research and Design Institute Company Limited, Qinhuangdao, Hebei 066001 (CN); China National Building Material Group Co., Ltd., Haidian 100036 (CN)
(72) Inventor: WANG, Jian, Qinhuangdao, 066001 (CN); ZHI, Xiao, Qinhuangdao, 066001 (CN); CHEN, Fu, Qinhuangdao, 066001 (CN); XI, Guoyong, Qinhuangdao, 066001 (CN)
(74) Representative: J A Kemp LLP

(56) References cited:
- WO-A1-2022/155434
- US-B2- 9 316 394

## Description

### TECHNICAL FIELD

The present invention relates to the field of flue gas treatment technology, in particular to a high-hydrogen fuel flue gas treatment system and method.

### BACKGROUND

During the production process of flat glass, there is a huge amount of CO₂ emissions, with CO₂ emissions produced by fossil fuels accounting for up to 60% of the emissions, making it a major contributor to the total amount of CO₂ emissions. From the perspective of reducing CO₂, reducing CO₂ emissions during the production of flat glass is one of the future trends, and it is imperative to effectively reduce carbon emissions by replacing fossil fuels with green fuels.

Hydrogen is a green and clean energy source with high calorific value and is suitable for replacing fossil fuels. However, it also has the characteristics of active chemical properties, high safety requirements for use, and weak combustion flame radiation ability.

In the production process of flat glass, a certain amount of hydrogen is mixed in the fuel. The products of high-hydrogen fuel combustion are mainly water and CO₂, and the content of water vapor in the flue gas can reach more than 50%. If flue gas is directly discharged, there will be the following drawbacks.

Firstly, the flue gas will corrode the flue material, leading to phenomena such as hydration, hydrolysis and flaking, etc.;
Secondly, white smoke phenomenon will be generated during the chimney stack emission process. The white smoke generated is the vapor mist condensed by high-temperature gases after air cooling, which affects the flue gas exhaust effect. Additionally, excessive CO₂ emissions into the atmosphere can easily lead to the greenhouse effect. Taking a 600t/d float glass production line as an example, the total amount of flue gas emitted is about 110,000-140,000 cubic meters per hour, and the temperature at the bottom of the flue is in a range from 300°C to 400°C, and a large amount of white smoke will be generated when the flue gas is discharged.

WO 2022/155434A1 discloses methods and apparatus for improved efficiency and flue gas scrubbing in a fired heater using a condensing convection section. The method preheats a hydrocarbon or hydrocarbon/water process feed stream in a coil in the convection section of a fired heater, collects condensate from the flue gas, and scrubs the flue gas with the recirculated condensate. The apparatus has a heat transfer coil disposed in the convection section, to preheat a process stream and form condensate from the flue gas, and a condensate recirculation loop to collect the condensate from the convection section.

US 9316394B2 discloses a system for the recovery of heat from gases. The heat recovery system uses a wetted heat transfer surface to recover heat from a bulk gas, such as a flue gas. The system utilizes wetted heat transfer tubes which are sprayed in a manner to minimize the film thickness of the wetting on the heat transfer tubes. To improve efficiency, the contact liquid used to wet the heat transfer tubes is maintained at a temperature between the temperature of the exiting cooled gas and the temperature of the inlet (cool) process fluid to be heated. Such heat recovery system design criteria enhance performance, and thus enable more efficient heat recovery to be practiced, particularly in systems where combustion gases are encountered.

### SUMMARY

The invention is defined in the independent claims. Further aspects and preferred embodiments are defined in the dependent claims. Any aspects, embodiments and examples of the present disclosure which do not fall under the scope of the appended claims do not form part of the invention and are merely provided for illustrative purposes. A technical problem to be solved by the present invention is to overcome the defect that white smoke will be discharged during the production of flat glass to affect the flue gas exhaust effect, as well as the defect of excessive CO₂ emissions, thereby providing a high-hydrogen fuel flue gas treatment system and method.

To achieve the above object, the technical solution adopted by the present invention is as follows.

A high-hydrogen fuel flue gas treatment system, comprising
a flue provided with a flue gas inlet and a flue gas outlet;
a condensing device arranged inside the flue, and the condensing device is suitable for condensing the flue gas flowing through the flue to condense the water vapor in the flue gas into water and separate it;
a CO₂ capture device arranged inside the flue and above the condensing device, and the CO₂ capture device is suitable for collecting CO₂ from the remaining flue gas after separation.

The condensing device is a condensing tube bundle; one end of the condensing tube bundle is provided with a water inlet pipe, and the other end of the condensing tube bundle is provided with a water outlet pipe; the water inlet pipe is connected to a water supply device, and the water outlet pipe discharges the water inside the condensing tube bundle.

Optionally, the condensing tube bundle is a tower-shaped condensing tube;
and/or the material of the condensing tube bundle is copper;
and/or a liquid level gauge is installed inside the condensing tube bundle.

Optionally, the water supply device comprises:
a water storage tank communicated with the water inlet pipe, and the water storage tank is suitable for supplying water to the water inlet pipe; and
a first valve assembly arranged on the water inlet pipe.

A circulating pipeline is connected between the water inlet pipe of the condensing tube bundle and the water outlet pipe of the condensing tube bundle, and a heat exchanger is installed on the circulating pipeline.

The heat exchanger comprises:
heat exchanger shell;
a first pipeline, one end of which is communicated with the water outlet pipe, and the other end of which is connected to the circulating pipeline; and
a second pipeline, one end of which is a cold air inlet, and the other end of which is a hot air outlet; wherein the flue gas discharged from the flue gas outlet enters the second pipeline for heat exchange through the cold air inlet, and the flue gas after heat exchange is discharged from the hot air outlet and fed into a glass furnace for combustion.

Optionally, a water tank is installed at the inner bottom of the flue, and the water tank is used to collect the condensed and separated water in the flue; the water tank is communicated with the water outlet pipe through a U-shaped drainage pipe, and a second valve assembly is arranged on the U-shaped drainage pipe.

The CO₂ capture device comprises:
a CO₂ collector located above the condensing device, and a CO₂ discharge pipe is arranged on the CO₂ collector; and
a high-pressure accumulator connected to the end part of the CO₂ discharge pipe, and the high-pressure accumulator is suitable for collecting and storing CO₂ captured by the CO₂ collector.

A method for treating high-hydrogen fuel flue gas, which is carried out based on the high-hydrogen fuel flue gas treatment system, comprising the following steps of:
subjecting the flue gas to enter the flue from the flue gas inlet, and subjecting the flue gas to transport inside flue and separate to produce water under the condensation effect of the condensing device;
collecting the CO₂ in the separated flue gas by the CO₂ capture device; and
discharging the remaining flue gas after removing CO₂ from the flue gas outlet.

Optionally, both the water inside the condensing device and the water condensed from the flue can be used separately or in a mix manner to heat combustion air, and re-injected into the condensing device for recycling after heat-exchanging with the combustion air.

The technical solution of the present invention has the following advantages.
1. The high-hydrogen fuel flue gas treatment system provided by the present invention condenses the water vapor in the flue gas through a condensing device, separates the water vapor in the flue gas to generate water, reduces or eliminates the phenomenon of white smoke in the flue gas, reduces the need for white smoke removal in the flue gas, and purifies and collects CO₂ in the flue gas through a CO₂ capture device. The purified CO₂ can be used for industrial purposes, so that a small amount of CO₂ is discharged into the atmosphere, and the total amount of flue gas discharged from the flue is reduced at the same time.

Due to the fact that a condensing device is added inside the flue in the present invention, the water vapor in the flue gas is condensed when the flue gas passes through the flue, thereby reducing the effective height of the chimney stack and reducing investment costs.

Moreover, after the separation of the flue gas by the present invention, the concentration of CO₂ in the flue gas increases significantly, mainly CO₂, with a small amount of gas media such as NOx, SOx, H₂O, O₂, etc., which is conducive to the capture and purification of CO₂.

2. In the high-hydrogen fuel flue gas treatment system provided by the present invention, the condensing tube bundle is made of copper, which can prevent the corrosion of the condensing tube bundle by the flue gas and water. At the same time, the copper is soft and can be bent, which can increase the contact area of the condensing tube bundle and improve the condensation effect.

3. In the high-hydrogen fuel flue gas treatment system provided by the present invention, a circulating pipeline is connected between the water inlet pipe of the condensing tube bundle and the water outlet pipe of the condensing tube bundle, and a heat exchanger is arranged on the circulating pipeline. The water discharged from the water outlet pipe enters the heat exchanger through a circulating pipeline for heat exchange, thereby effectively utilizing heat enthalpy to heat the combustion air. After heat exchange, the water flows back to the water inlet pipe of the condensing tube bundle, thereby achieving water circulation and utilization.

4. In the high-hydrogen fuel flue gas treatment system provided by the present invention, a U-shaped drainage pipe is communicated with the water tank for liquid sealing the water tank, so as to prevent the flue gas from entering the U-shaped drainage pipe.

5. The method for treating high-hydrogen fuel flue gas provided by the present invention uses a condensing tube bundle with water as the medium to condense the flue gas, separates water and CO₂, and purifies the CO₂ concentration to more than 90% through a CO₂ capture device. The medium heated by the flue gas and the condensed water have a certain heat enthalpy that can be used to heat air, and the water that has undergone heat exchange with the air can also be re-injected into the condensing tube bundle as a medium for recycling, thereby realizing zero emissions throughout the entire process and fully utilizing the thermal energy. Moreover, the heated air can be introduced into the glass furnace to realize the cascade utilization of waste heat.

### BRIEF DESCRIPTION OF THE DRAWINGS

In order to more clearly illustrate the specific embodiments of the present invention or the technical solutions in the prior art, the accompanying drawings required for the specific embodiments or the description of the prior art will be briefly described as follows. Obviously, the accompanying drawings in the following description show some embodiments of the present invention, other accompanying drawings can be obtained based on these drawings without any creative effort for those skilled in the art.

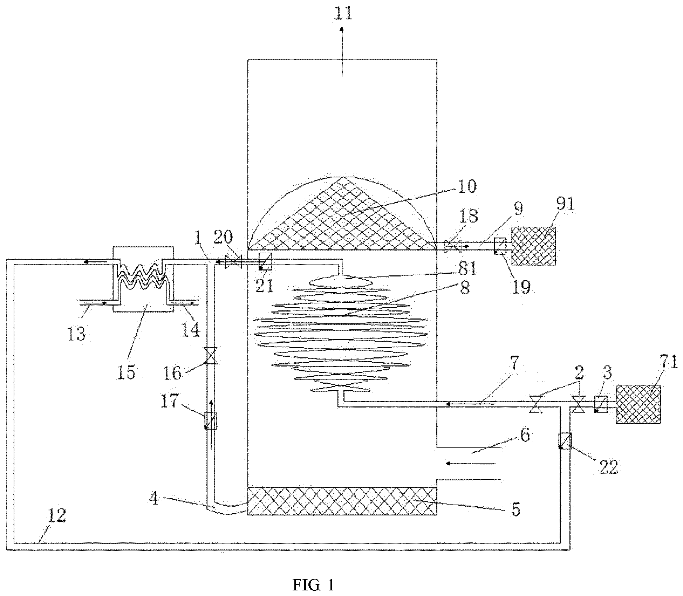

FIG 1 is a structural schematic diagram of the high-hydrogen fuel flue gas treatment system of the present invention.

### Reference signs:

1. water outlet pipe; 2. first valve; 3. first check valve; 4. U-shaped drainage pipe; 5. water tank; 6. flue gas inlet; 7. water inlet pipe; 71. water storage tank; 8. condensing tube bundle; 81. liquid level gauge; 9. CO₂ discharge pipe; 91. high-pressure accumulator; 10. CO₂ collector; 11. flue gas outlet; 12. circulating pipeline; 13. cold air inlet; 14. hot air outlet; 15. heat exchanger; 16. second valve; 17. second check valve; 18. third valve; 19. third check valve; 20. fourth valve; 21. fourth check valve; 22. fifth check valve.

### DETAILED DESCRIPTION

The following will provide a clear and complete description of the technical solution of the present invention in conjunction with the accompanying drawings. It is obvious that the described examples are part of the embodiments of the present invention, not all of them. Based on the examples in the present invention, all other examples obtained by ordinary technicians in the art without creative labor fall within the scope of protection of the present invention.

In the description of the present invention, it should be noted that the terms "on", "in", "out", etc. indicate the orientation or position relationship based on the orientation or position relationship shown in the drawings, only for the convenience of describing the present invention and simplifying the description, rather than indicating or implying that the device or element referred to must have a specific orientation, or be constructed and operated in a specific orientation, and therefore cannot be understood as a limitation of the present invention. In addition, the terms "first," "second," "third," "fourth," and "fifth" are only used for description and cannot be understood as indicating or implying relative importance.

In the description of the present invention, it should be noted that unless otherwise specified and limited, the terms "connected" and "communicated" should be understood broadly, for example, they can be fixed connections, detachable connections, or integrally connected; they can be a mechanical connection or an electrical connection; they can be directly connected, or indirectly connected through an intermediate medium, or they can be the internal communication between two components. For ordinary technical personnel in this field, the specific meanings of the above terms in the present invention can be understood in specific circumstances.

In addition, the technical features involved in different embodiments of the present invention described below can be combined with each other as long as they do not conflict with each other.

### EXAMPLE 1

As shown in FIG 1, this embodiment discloses a high-hydrogen fuel flue gas treatment system, which includes a flue, a condensing device, and a CO₂ capture device.

The flue is provided with a flue gas inlet 6 and a flue gas outlet 11. The flue gas inlet 6 is located at the bottom of the side wall of the flue, and the flue gas outlet 11 is located at the top of the flue.

The condensing device is arranged inside the flue, and the condensing device is suitable for condensing the flue gas flowing through the flue to condense the water vapor in the flue gas into water and separate it.

The CO₂ capture device is arranged inside the flue and above the condensing device. The CO₂ capture device is suitable for collecting CO₂ in the remaining flue gas after the separation.

In the above-mentioned high-hydrogen fuel flue gas treatment system, the system condenses the water vapor in the flue gas through the condensing device, separates the water vapor in the flue gas to generate water, prevents the phenomenon of white smoke, makes the glass production line reduce or eliminate the phenomenon of white smoke (water vapor), and reduces the current process of flue gas whitening; moreover, the CO₂ in the flue gas is purified and collected by a CO₂ capture device. The purified CO₂ can be used for industrial application, thereby allowing a small amount of CO₂ to be discharged into the atmosphere while reducing the total amount of flue gas discharged from the flue.

Due to the fact that a condensing device is added inside the flue in the present invention, the water vapor in the flue gas is condensed when the flue gas passes through the flue, thereby reducing the effective height of the chimney and reducing investment costs.

Moreover, after the separation of the flue gas by the present invention, the concentration of CO₂ in the flue gas increases significantly, mainly CO₂, with a small amount of gas media such as NOx, SOx, H₂O, O₂, etc., which is conducive to the capture and purification of CO₂.

Specifically, the condensing device is a condensing tube bundle 8, which can eliminate the phenomenon of white smoke in the flue gas through the condensation effect of the condensing device on the flue gas. One end of condensing tube bundle 8 is provided with a water inlet pipe 7, and the other end of condensing tube bundle 8 is provided with a water outlet pipe 1. The water inlet pipe 7 is connected to a water supply device for supplying cooling water to the water inlet pipe 7. The water outlet pipe 1 discharges the water inside the condensing tube bundle 8.

The condensing tube bundle 8 is a tower-shaped condensing tube, that is, the condensing tube bundle 8 is a multi-layer laminated structure. The interior of each laminated plate is hollow and intercommunicated, and the outer surface of each laminated plate can come into contact with the flue gas in the flue, which can effectively increase the contact area with the flue gas and further improve the cooling effect on the flue gas.

The diameter of each laminated plate of the condensing tube bundle 8 increases sequentially from the bottom to the middle, and decreases sequentially from the middle to the top, thereby effectively increasing the contact area between the flue gas and the condensing tube bundle 8.

The condensing tube bundle 8 is made of copper, which can prevent the corrosion of the condensing tube bundle by the flue gas and water. At the same time, the copper material is soft and can be bent, which can increase the contact area of the condensing tube bundle and improve the condensation effect.

The liquid level gauge 81 is installed inside the condensing tube bundle 8, which monitors the water level inside the condensing tube bundle 8. When the water level inside the condensing tube bundle 8 is lower than the set water level, water is injected into the condensing tube bundle 8 through the water supply device.

The water supply device comprises a water storage tank 71 and a first valve assembly. The water storage tank 71 is communicated with the water inlet pipe 7, and the water storage tank 71 is suitable for supplying water to the water inlet pipe 7. A water supply pump is installed inside the water storage tank 71. The first valve assembly is installed on the water inlet pipe 7. The first valve assembly comprises the first valve 2 and the first check valve 3. The first valve 2 is used to control the on-off of the water inlet pipe 7, and can also adjust the flow rate. The first check valve 3 is used to prevent the water after heat exchange in the condensing tube bundle 8 from flowing back to the water storage tank 71, so as to avoid affecting the temperature of the cooling water in the water storage tank 71.

A circulating pipeline 12 is connected between the water inlet pipe 7 of the condensing tube bundle 8 and the water outlet pipe 1 of the condensing tube bundle 8, and a heat exchanger 15 is arranged on the circulating pipeline 12. In this embodiment, the water discharged from the water outlet pipe 1 of the condensing tube bundle 8 is the water with a certain temperature. The water discharged from the water outlet pipe 1 enters the heat exchanger 15 through the circulating pipeline 12 for heat exchange to further reduce its temperature, and then flows back to the water inlet pipe 7 of the condensing tube bundle 8 to realize water recycling.

When a circulating pipeline 12 is connected between the water inlet pipe 7 and the water outlet pipe 1, in order to prevent the medium supplied by the water supply device from entering the circulating pipeline 12, a fifth check valve 22 is provided on the circulating pipeline in this embodiment. Providing the fifth check valve 22 makes the medium in the circulating pipeline only transportable in one direction.

Moreover, in this embodiment, two first valves 2 are provided, which are respectively located on the water inlet pipe 7 and are respectively located at the front and rear ends of the junction between the circulating pipeline 12 and the water inlet pipe 7. Furthermore, the circulating pipeline 12 or the water supply device can supply the medium to the condensing tube bundle 8 separately, or the circulating pipeline 12 and the water supply device can supply the medium to the condensing tube bundle 8 simultaneously.

The heat exchanger 15 comprises a heat exchanger shell, a first pipeline, and a second pipeline. Both the first pipeline and the second pipeline are passed though the heat exchanger shell and installed inside the heat exchanger shell, and the shapes of the first pipeline and the second pipeline are bent tube shapes, and they are closely adjacent to each other. One end of the first pipeline is communicated with the water outlet pipe 1, and the other end of the first pipeline is connected to the circulating pipeline 12. One end of the second pipeline is the cold air inlet 13, and the other end of the second pipeline is a hot air outlet 14, cold air is introduced into the cold air inlet 13, so that the cold air in the second pipeline is heat-exchanged with the water in the first pipeline, and the air after heat exchange is discharged from the hot air outlet 14.

In order to further utilize the flue gas discharged from the flue, in this embodiment, the flue gas discharged from flue gas outlet 11 enters the second pipeline for heat exchange through the cold air inlet 13, which increases the temperature of the flue gas. The flue gas after heat exchange is discharged from the hot air outlet 14 and fed into the glass furnace for combustion, so as to realize full utilization of heat and reduce energy consumption during glass combustion. As another alternative embodiment, the flue gas discharged from flue gas outlet 11 is mixed with air and enters the second pipeline for heat exchange through cold air inlet 13.

The inner bottom of the flue is provided with a water tank 5, which is used to collect the condensed and separated water in the flue, and the water tank can be provided with a pipeline to discharge the water.

The water tank 5 is communicated with the water outlet pipe 1 through a U-shaped drainage pipe 4, and the U-shaped drainage pipe is communicated with the water tank for liquid sealing the water tank to prevent flue gas from escaping from the U-shaped drainage pipe. The condensing tube bundle and the water that falls into the water tank after condensation can be recycled through heat exchange to avoid waste of resources. The condensed water has a high heat enthalpy, which can be fully utilized for heating combustion air and other purposes. After preheating the combustion air, the combustion air is allowed to burn.

The U-shaped drainage pipe 4 is provided with a second valve assembly, the second valve assembly comprises a second valve 16 and a second check valve 17. The second valve 16 is used to control the on-off of the U-shaped drainage pipe 4, and the second check valve 17 is used to prevent the water in the water outlet pipe 1 from flowing back to the water tank 5, thereby ensuring that when the U-shaped drainage pipe 4 is communicated with the water outlet pipe 1, the water in both the U-shaped drainage pipe 4 and the water outlet pipe 1 can flow into the first pipeline of the heat exchanger 15.

In addition, in order to ensure that the water in the water tank 5 is discharged smoothly, a delivery pump may also be provided on the U-shaped drainage pipe 4, and the water in the water tank 5 is pumped to the water outlet pipe 1 through the delivery pump.

When the U-shaped drainage pipe 4 is communicated with the water outlet pipe 1, this embodiment is provided with a fourth valve assembly on the water outlet pipe 1, and the fourth valve assembly comprises a fourth valve 20 and a fourth check valve 21. The fourth valve 20 is used to control the on-off of the water outlet pipe 1, and the fourth check valve 21 is used to prevent the water in the water outlet pipe 1 from flowing back to the condensate pipe bundle 8.

The CO₂ capture device comprises a CO₂ collector 10 and a high-pressure accumulator 91. The CO₂ collector 10 is located above the condensing device, and is used to purify and capture the separated CO₂. The CO₂ collector 10 can purify CO₂ to more than 90%. The CO₂ collector 10 is provided with a CO₂ discharge pipe 9. The high-pressure accumulator 91 is connected to the end of the CO₂ discharge pipe 9, and the high-pressure accumulator is suitable for collecting and storing CO₂ captured by the CO₂ collector 10. The working pressure of the high-pressure accumulator is greater than or equal to 10MPa, which is used to store low-temperature liquid CO₂. The structure of high-pressure accumulator can adopt an existing conventional structure, and its specific structure will not be elaborated here.

The CO₂ discharge pipe 9 is also provided with a third valve assembly, the third valve assembly comprises a third valve 18 and a third check valve 19. The third valve 18 is used to control the on-off of and a flow rate of the CO₂ discharge pipe 9, and the third check valve 19 is used to prevent the CO₂ in the high-pressure accumulator 91 from flowing back to the CO₂ collector 10.

### EXAMPLE 2

This embodiment discloses a method for treating high-hydrogen fuel flue gas, which is carried out based on the high-hydrogen fuel flue gas treatment system in Example 1, and comprises the following steps.

The flue gas is subjected to enter the flue from flue gas inlet 6, and the flue gas is subjected to transport inside the flue and separate to produce water under the condensation effect of the condensing device. The water droplets generated under the condensation effect of the condensing device fall into the water tank 5. The water in the water tank 5 passes through U-shaped drainage pipe 4 and merges with the condensed water in water outlet pipe 1. The water in the water tank 5 and the water in the condensing tube bundle 8 can be heat-exchanged through heat exchanger 15. The water after heat exchange is then transported to the condensing tube bundle 8 through water inlet pipe 7.

After separation, the CO₂ in the remaining flue gas is purified by the CO₂ collector 10, and then captured and stored in high-pressure accumulator 91, ensuring that its purity is more than 90% and can be used for industrial applications.

The remaining flue gas after removing CO₂ is discharged from flue gas outlet 11.

As a further improved embodiment, the flue gas discharged from the flue gas outlet 11 of the present invention enters the second pipeline of the heat exchanger 15 from the cold air inlet 13, that is, the flue gas that was previously cooled and discharged into the atmosphere is re-introduced into the heat exchanger 15 for heat exchange. After heat exchange, the temperature of the flue gas increases, and then the high-temperature flue gas is fed into the glass furnace to realize the cascade utilization of waste heat and reduce energy consumption during glass combustion.

The above method for treating high-hydrogen fuel flue gas uses a condensing tube bundle with water as the medium to condense the flue gas, separates water and CO₂, and purifies the CO₂ concentration to more than 90% through a CO₂ capture device. The medium heated by the flue gas and the condensed water have a certain heat enthalpy that can be used to heat air. The water that has undergone heat exchange with the air can also be re-injected into the condensing tube bundle as a medium for recycling, thereby realizing zero emission throughout the entire process and full utilization of heat energy. Moreover, the heated air can be introduced into the glass furnace to realize the cascade utilization of waste heat.

Obviously, the above examples are only for the purpose of clarifying the examples provided, rather than limiting the implementation. For those skilled in the art, different forms of changes or modifications can be made based on the above explanations. There is no need and cannot be an exhaustive list of all implementations here. The obvious changes or variations arising from this are still within the scope of protection of the present invention.

## Claims

1. A flue gas treatment system suitable for a flue gas originating from a combustion process in which a fuel comprising hydrogen is combusted, the flue gas treatment system comprises:
a flue provided with a flue gas inlet (6) and a flue gas outlet (11);
a condensing device arranged inside the flue, and the condensing device is suitable for condensing the flue gas flowing through the flue to condense water vapor in the flue gas into water and separate it; and
a CO₂ collector (10) arranged inside the flue and above the condensing device, and the CO₂ collector (10) is suitable for collecting CO₂ in the remaining flue gas after separation, and a CO₂ discharge pipe (9) is arranged on the CO₂ collector (10), and a high-pressure accumulator (91) is connected to the end part of the CO2 discharge pipe (9), and the high-pressure accumulator (91) is suitable for collecting and storing CO2 captured by the CO2 collector (10);
the condensing device is a condensing tube bundle (8); one end of the condensing tube bundle (8) is provided with a water inlet pipe (7), and the other end of the condensing tube bundle (8) is provided with a water outlet pipe (1), the water inlet pipe (7) is connected to a water supply device, and the water outlet pipe (1) discharges the water inside the condensing tube bundle (8);
**characterized in that** a circulating pipeline (12) is connected between the water inlet pipe (7) of the condensing tube bundle (8) and the water outlet pipe (1) of the condensing tube bundle (8), and a heat exchanger (15) is arranged on the circulating pipeline (12);
the heat exchanger (15) comprises:
a heat exchanger shell;
a first pipeline, one end of which is communicated with the water outlet pipe (1), and the other end of which is connected to the circulating pipeline (12); and
a second pipeline, one end of which is a cold air inlet (13), and the other end of which is a hot air outlet (14); wherein the flue gas discharged from the flue gas outlet (11) enters the second pipeline for heat exchange through the cold air inlet (13), and the flue gas after heat exchange is discharged from the hot air outlet (14) and fed into a glass furnace for combustion.

2. The flue gas treatment system of claim 1, **characterized in that** the condensing tube bundle (8) is a tower-shaped condensing tube;
the material of the condensing tube bundle (8) is copper;
a liquid level gauge (81) is installed inside the condensing tube bundle (8) and
wherein the condensing tube bundle (8) is a multi-layer laminated structure, and the diameter of each laminated plate of the condensing tube bundle (8) increases sequentially from the bottom to the middle, and decreases sequentially from the middle to the top.

3. The flue gas treatment system of claim 1, **characterized in that** the water supply device comprises:
a water storage tank (71) communicated with the water inlet pipe (7), and the water storage tank (71) is suitable for supplying water to the water inlet pipe (7); and
a first valve assembly arranged on the water inlet pipe (7).

4. The flue gas treatment system of claim 1, **characterized in that** a water tank (5) is arranged at the inner bottom of the flue, and the water tank (5) is used to collect the condensed and separated water in the flue; the water tank (5) is communicated with the water outlet pipe (1) through a U-shaped drainage pipe (4), and a second valve assembly is arranged on the U-shaped drainage pipe (4).

5. A method for treating fuel flue gas, **characterized in that** the method is carried out based on the flue gas treatment system of any one of claims 1 to 4, comprising the following steps of:
subjecting the flue gas to enter the flue from the flue gas inlet (6), and subjecting the flue gas to transport inside the flue and separate to produce water under the condensation effect of the condensing device;
collecting the CO₂ in the separated flue gas by the CO₂ collector (10); and
discharging the remaining flue gas after removing CO₂ from the flue gas outlet (11).

6. The for treating fuel flue gas of claim 5, **characterized in that** both the water inside the condensing device and the water condensed from the flue can be used separately or in a mix manner to heat combustion air, and re-injected into the condensing device for recycling after heat-exchanging with the combustion air.

## Patentansprüche

1. Rauchgasbehandlungssystem, das für ein Rauchgas geeignet ist, das aus einem Verbrennungsprozess stammt, in dem ein Brennstoff, der Wasserstoff umfasst, verbrannt wird, wobei das Rauchgasbehandlungssystem umfasst:
einen Abzug, der mit einem Rauchgaseinlass (6) und einem Rauchgasauslass (11) versehen ist;
eine Kondensationsvorrichtung, die innerhalb des Abzugs angeordnet ist, und wobei die Kondensationsvorrichtung geeignet ist, das durch den Abzug strömende Rauchgas zu kondensieren, um Wasserdampf in dem Rauchgas zu Wasser zu kondensieren und es abzutrennen; und
einen CO₂-Sammler (10), der innerhalb des Abzugs und oberhalb der Kondensationsvorrichtung angeordnet ist, und wobei der CO₂-Sammler (10) geeignet ist, um CO₂ in dem verbleibenden Rauchgas nach der Abtrennung zu sammeln, und ein CO₂-Ableitungsrohr (9) an dem CO₂-Sammler (10) angeordnet ist, und ein Hochdruckspeicher (91) mit dem Endteil des CO₂-Ableitungsrohrs (9) verbunden ist, und der Hochdruckspeicher (91) geeignet ist, um CO₂ zu sammeln und zu speichern, das von dem CO₂-Sammler (10) aufgefangen wird;
die Kondensationsvorrichtung ein Kondensationsrohrbündel (8) ist; ein Ende des Kondensationsrohrbündels (8) mit einem Wassereinlassrohr (7) versehen ist, und das andere Ende des Kondensationsrohrbündels (8) mit einem Wasserauslassrohr (1) versehen ist, das Wassereinlassrohr (7) mit einer Wasserzufuhrvorrichtung verbunden ist, und das Wasserauslassrohr (1) das Wasser im Inneren des Kondensationsrohrbündels (8) ableitet;
**dadurch gekennzeichnet, dass** eine Zirkulationsleitung (12) zwischen dem Wassereinlassrohr (7) des Kondensationsrohrbündels (8) und dem Wasserauslassrohr (1) des Kondensationsrohrbündels (8) verbunden ist und ein Wärmetauscher (15) an der Zirkulationsleitung (12) angeordnet ist;
der Wärmetauscher (15) umfasst:
ein Wärmetauschergehäuse;
eine erste Rohrleitung, deren eines Ende mit dem Wasserauslassrohr (1) in Verbindung steht und deren anderes Ende mit der Zirkulationsrohrleitung (12) verbunden ist; und
eine zweite Rohrleitung, deren eines Ende ein Kaltlufteinlass (13) ist und deren anderes Ende ein Heißluftauslass (14) ist; wobei das aus dem Rauchgasauslass (11) abgeleitete Rauchgas für einen Wärmetausch durch den Kaltlufteinlass (13) in die zweite Leitung eintritt, und das Rauchgas nach dem Wärmeaustausch aus dem Heißluftauslass (14) abgeleitet und für die Verbrennung in einen Glasofen zugeführt wird.

2. Rauchgasbehandlungssystem nach Anspruch 1, **dadurch gekennzeichnet, dass** das Kondensationsrohrbündel (8) ein turmförmiges Kondensationsrohr ist;
das Material des Kondensationsrohrbündels (8) Kupfer ist;
ein Flüssigkeitspegelmessgerät (81) im Innern des Kondensationsrohrbündels (8) installiert ist und wobei das Kondensationsrohrbündel (8) eine laminierte Mehrschichtstruktur ist und der Durchmesser jeder laminierten Platte des Kondensationsrohrbündels (8) der Reihe nach von dem Boden bis zu der Mitte zunimmt und der Reihe nach von der Mitte bis zu der Oberseite abnimmt.

3. Rauchgasbehandlungssystem nach Anspruch 1, **dadurch gekennzeichnet, dass** die Wasserzufuhrvorrichtung umfasst:
einen Wasserspeichertank (71), der mit dem Wassereinlassrohr (7) in Kommunikation steht, und wobei der Wasserspeichertank (71) geeignet ist, um Wasser an das Wassereinlassrohr (7) zuzuführen; und
eine erste Ventilbaugruppe, die an dem Wassereinlassrohr (7) angeordnet ist.

4. Rauchgasbehandlungssystem nach Anspruch 1, **dadurch gekennzeichnet, dass** ein Wassertank (5) an dem inneren Boden des Abzugs angeordnet ist und der Wassertank (5) verwendet wird, um das kondensierte und abgetrennte Wasser in dem Abzug zu sammeln; der Wassertank (5) über ein U-förmiges Abflussrohr (4) mit dem Wasserauslassrohr (1) in Kommunikation steht und eine zweite Ventilbaugruppe an dem U-förmigen Abflussrohr (4) angeordnet ist.

5. Verfahren zum Behandeln von Brennstoffrauchgas, **dadurch gekennzeichnet, dass** das Verfahren auf Grundlage des Rauchgasbehandlungssystems nach einem der Ansprüche 1 bis 4 ausgeführt wird und die folgenden Schritte umfasst:
Aussetzen des Rauchgases, um aus dem Rauchgaseinlass (6) in den Abzug einzutreten, und Aussetzen des Rauchgases, um im Innern des Abzugs transportiert und abgetrennt zu werden, um unter der Kondensationswirkung der Kondensationsvorrichtung Wasser zu produzieren;
Sammeln des CO₂ in dem abgetrennten Rauchgas durch den CO₂-Sammler (10); und
Ableiten des verbleibenden Rauchgases nach dem Entfernen von CO₂ aus dem Rauchgasauslass (11).

6. Verfahren zum Behandeln von Brennstoffrauchgas nach Anspruch 5, **dadurch gekennzeichnet, dass** sowohl das Wasser im Innern der Kondensationsvorrichtung als auch das Wasser, das aus dem Abzug kondensiert wird, getrennt oder auf eine gemischte Weise verwendet werden kann, um Verbrennungsluft zu erwärmen und nach dem Wärmeaustausch mit der Verbrennungsluft in die Kondensationsvorrichtung zum Wiederverwenden erneut eingespritzt zu werden.

## Revendications

1. Système de traitement de gaz de carneau approprié pour un gaz de carneau provenant d'un processus de combustion dans lequel est effectuée la combustion d'un combustible comprenant de l'hydrogène, le système de traitement de gaz de carneau comprend :
un carneau pourvu d'une entrée de gaz de carneau (6) et d'une sortie de gaz de carneau (11) ;
un dispositif de condensation agencé à l'intérieur du carneau, et le dispositif de condensation est approprié pour condenser le gaz de carneau s'écoulant à travers le carneau pour condenser de la vapeur d'eau dans le gaz de carneau en eau et la séparer ; et
un collecteur de CO₂ (10) agencé à l'intérieur du carneau et au-dessus du dispositif de condensation, et le collecteur de CO₂ (10) est approprié pour collecter du CO₂ dans le gaz de carneau restant après la séparation, et un tuyau d'évacuation de CO₂ (9) est agencé sur le collecteur de CO₂ (10), et un accumulateur à haute pression (91) est raccordé à la partie d'extrémité du tuyau d'évacuation de CO₂ (9), et l'accumulateur à haute pression (91) est approprié pour collecter et stocker du CO₂ capturé par le collecteur de CO₂ (10) ;
le dispositif de condensation est un faisceau tube de condensation (8); une extrémité du faisceau tube de condensation (8) est pourvue d'un tuyau d'entrée d'eau (7), et l'autre extrémité du faisceau tube de condensation (8) est pourvue d'un tuyau de sortie d'eau (1), le tuyau d'entrée d'eau (7) est raccordé à un dispositif d'alimentation en eau, et le tuyau de sortie d'eau (1) évacue l'eau à l'intérieur du faisceau tube de condensation (8);
**caractérisé en ce qu'**une tuyauterie de circulation (12) est raccordée entre le tuyau d'entrée d'eau (7) du faisceau tube de condensation (8) et le tuyau de sortie d'eau (1) du faisceau tube de condensation (8), et un échangeur de chaleur (15) est agencé sur la tuyauterie de circulation (12);
l'échangeur de chaleur (15) comprend :
une enveloppe d'échangeur de chaleur ;
une première tuyauterie, dont une extrémité est mise en communication avec le tuyau de sortie d'eau (1), et dont l'autre extrémité est raccordée à la tuyauterie de circulation (12) ; et
une seconde tuyauterie, dont une extrémité est une entrée d'air froid (13), et dont l'autre extrémité est une sortie d'air chaud (14) ; dans lequel le gaz de carneau évacué depuis la sortie de gaz de carneau (11) entre dans la seconde tuyauterie pour échange de chaleur par le biais de l'entrée d'air froid (13), et le gaz de carneau après l'échange de chaleur est évacué de la sortie d'air chaud (14) et fourni dans un four à verre pour combustion.

2. Système de traitement de gaz de carneau de la revendication 1, **caractérisé en ce que** le faisceau tube de condensation (8) est un tube de condensation en forme de tour ;
le matériau du faisceau tube de condensation (8) est du cuivre ;
une jauge de niveau de liquide (81) est installée à l'intérieur du faisceau tube de condensation (8) ; et
dans lequel le faisceau tube de condensation (8) est une structure stratifiée multicouche, et le diamètre de chaque plaque stratifiée du faisceau tube de condensation (8) augmente séquentiellement depuis la partie inférieure jusqu'au milieu, et diminue séquentiellement depuis le milieu jusqu'à la partie supérieure.

3. Système de traitement de gaz de carneau de la revendication 1, **caractérisé en ce que** le dispositif d'alimentation en eau comprend :
un réservoir de stockage d'eau (71) mis en communication avec le tuyau d'entrée d'eau (7), et le réservoir de stockage d'eau (71) est approprié pour effectuer l'alimentation en eau au tuyau d'entrée d'eau (7) ; et
un premier ensemble vanne agencé sur le tuyau d'entrée d'eau (7).

4. Système de traitement de gaz de carneau de la revendication 1, **caractérisé en ce qu'**un réservoir d'eau (5) est agencé au niveau de la partie inférieure intérieure du carneau, et le réservoir d'eau (5) est utilisé pour collecter l'eau condensée et séparée dans le carneau ; le réservoir d'eau (5) est mis en communication avec le tuyau de sortie d'eau (1) par le biais d'un tuyau de drainage en forme de U (4), et un second ensemble vanne est agencé sur le tuyau de drainage en forme de U (4).

5. Procédé de traitement de gaz de carneau de combustible, **caractérisé en ce que** le procédé est effectué sur la base du système de traitement de gaz de carneau de l'une quelconque des revendications 1 à 4, comprenant les étapes suivantes :
soumettre le gaz de carneau à l'entrée dans le carneau depuis l'entrée de gaz de carneau (6), et soumettre le gaz de carneau au transport à l'intérieur du carneau et à une séparation pour produire de l'eau sous l'effet de condensation du dispositif de condensation ;
collecter le CO₂ dans le gaz de carneau séparé, par le biais du collecteur de CO₂ (10) ; et
évacuer le gaz de carneau restant après éliminer le CO₂ de la sortie de gaz de carneau (11).

6. Procédé de traitement de gaz de carneau de combustible de la revendication 5, **caractérisé en ce que** l'eau à l'intérieur du dispositif de condensation et l'eau condensée provenant du carneau peuvent toutes les deux être utilisées séparément ou de manière mélangée pour chauffer de l'air de combustion, et réinjectées dans le dispositif de condensation pour le recyclage après l'échange de chaleur avec l'air de combustion.
